# EUROPÄISCHE PATENTSCHRIFT

(11) **EP 2 485 034 B1**
(45) Veröffentlichungstag und Bekanntmachung des Hinweises auf die Patenterteilung: **05.08.2015**
(21) Anmeldenummer: 11153070.5
(22) Anmeldetag: 02.02.2011
(51) Int. Cl.: G01M 15/09, G01M 15/11

(54) **Verfahren zur zylinderselektiven Erkennung von Zündaussetzern**
Method for cylinder-selective recognition of misfires
Procédé de reconnaissance sélective de cylindre de ratés d'allumage

(43) Veröffentlichungstag der Anmeldung: 08.08.2012
(73) Patentinhaber: agrogen GmbH, 91732 Merkendorf (DE)
(72) Erfinder: von Hollen, Philipp, 91732, Merkendorf (DE); Uphoff, Jann, 91732, Merkendorf (DE); Tietjen, Axel, 91732, Merkendorf (DE)
(74) Vertreter: RGTH

(56) Entgegenhaltungen:
- WO-A1-90/04093
- DE-A1- 2 431 799
- DE-A1- 19 950 484
- US-B1- 6 243 641

## Beschreibung

Die Erfindung bezieht sich auf ein Verfahren und eine Vorrichtung zur zylinderselektiven Erkennung einer ausbleibenden oder unvollkommen erfolgten Entzündung des Gemisches in mindestens einem Zylinder einer Brennkraftmaschine.

Beim Betrieb von Brennkraftmaschinen kann es zu unerwünschten Aussetzern bei der Entzündung des Gemisches, zur unvollständigen oder verschleppten Entzündung und Verbrennung des Gemisches kommen. Ursache dafür kann ein Ausbleiben des Zündfunkens, zum Beispiel durch eine defekte Zündkerze, ein schadhaftes Zündkabel oder ähnliches sein. Aber selbst bei funktionierender Zündung kann die Entzündung des Gemisches ausbleiben, oder unvollständig erfolgen oder verschleppt sein, beispielsweise dann, wenn das Gemisch zu fett oder zu mager ist.

### Stand der Technik

Aus der DE 602004001064T2 ist ein Verfahren zur Erkennung von Fehlzündungen durch die Analyse der Beschleunigung der Kurbelwelle bekannt.

Aufgabe der vorliegenden Erfindung ist es, ein einfaches Verfahren und eine Vorrichtung zur zylinderselektiven Erkennung dieser "Zündaussetzer" anzugeben.

Die WO 90/04093 A1 beschreibt ein Verfahren zum Erkennen von Zündaussetzern. Dabei ist ein Drucksensor im Abgasstrakt angeordnet. Vorgesehen ist dabei, dass auf ein entsprechendes Triggersignal von einem Zeitgeber hin eine Abtast/Halteeinrichtung den aktuellen Abgasdruck erfasst. Dieses Verfahren basiert auf einen Vergleich mit einem Abgasdruck-Kennfeld.

Aus der US 6,243,641 B1 ist ein System und ein Verfahren zur Detektion von Fehlzündungen bekannt, bei denen der Abgaskrümmerdruck durch einen einzigen manometerartigen Drucksensor, der in dem Abgaskrümmer angeordnet ist, gemessen wird, um Fehlzündungen in allen Zylindern eines Verbrennungsmotors zu erfassen. Der Drucksensor erfasst den

Abgaskrümmerdruck und liefert ein Signal über einen Analog-DigitalWandler zu einem Mikrocomputer.

Die DE 24 31 799 A1 zeigt eine Schaltung zur Aufbereitung von impulsförmigen Messsignalen eines induktiven Gebers, der den Zündstrom in einer Zündanlage eines Ottomotors abgreift. Die Schaltung soll eventuelle Störeinflüsse der Signale, wie zum Beispiel Amplitudenschwankungen oder Spannungsdurchschläge durch entsprechende Aufbereitung verringern bzw. vermeiden.

### Darstellung der Erfindung: Aufgabe, Lösung, Vorteile

Diese Aufgabe wird durch ein Verfahren zur zylinderselektiven Erkennung einer ausbleibenden oder unvollkommen erfolgten Entzündung des Gemisches in mindestens einem Zylinder einer Brennkraftmaschine mit mindestens einem Zylinder gelöst, wobei die Abgase aus den Zylindern über eine Abgassammelleitung geführt werden, wobei ein Referenzsignal gebildet wird, das sich auf die Stellung eines Kolbens eines Zylinders zu einer bestimmten Zeit T0 bezieht, wobei der Druck in der Abgassammelleitung gemessen wird und das Drucksignal in der Abgassammelleitung über der Zeit in Abhängigkeit vom Referenzsignal in Bezug auf die Unterschreitung eines Schwellwertes ausgewertet wird.

Das Verfahren ist bei Brennkraftmaschinen mit einem oder mehreren

Zylindern anwendbar. Das Ausbleiben bzw. die unvollständige oder auch die verschleppte, also die unvollkommene Entzündung des Gemisches wird im Folgenden mit "Zündaussetzer" bezeichnet. Damit ist nicht (nur) das Ausbleiben der Zündung bzw. des Zündfunkens gemeint, soweit dies nicht explizit angegeben ist. Das Ausbleiben der Zündung bzw. des Zündfunkens ist eine von mehreren Ursachen für Zündaussetzer. Für das hier mit "Zündaussetzer" bezeichnete Phänomen findet man auch die Bezeichnung "Verbrennungsaussetzer".

Die vorliegende Erfindung befasst sich nicht mit den typischen Zyklusschwankungen des Otto-Brennverfahrens. Das erfindungsgemäße Verfahren reagiert darauf nicht und soll auch nicht darauf reagieren.

Erfindungsgemäß wird als Referenzsignal der Impuls der Zündspannung eines bestimmten Zylinders verwendet. Damit steht ein einfach abzugreifendes, auf die Stellung des oder der Kolben (bei mehrzylindrigen Brennkraftmaschinen) referenzierendes Signal als Trigger-Signal zur Verfügung. Der Impuls der Zündspannung kann zum Beispiel mit einer Messzange am Zündkabel abgegriffen werden.

Die vorgenannte Bildung des Referenzsignals versagt jedoch dann, wenn das Zündkabel schadhaft ist oder Probleme mit der elektrischen Zündung bestehen. Dann hat man zwar direkt einen Hinweis auf die Ursache des Zündaussetzers in dem Zylinder, an dem das Signal gemessen wird, hat aber kein Referenzsignal für die Anzeige des Druckverlaufes mehr zur Verfügung. Zur Vermeidung dieses Problems ist es vorteilhaft, das Referenzsignal von der Nockenwelle abzugreifen oder anderweitig zu generieren.

Der Schwellwert kann vorteilhaft aus dem Mittelwert des Drucksignals erzeugt werden. Es ist aber auch möglich, als Schwellwert ein vorgegebenes Kennfeld zu verwenden.
Eine vorteilhafte Ausbildung der Erfindung besteht darin, dass ein aussetzender oder unvollkommen zündender Zylinder über eine Anzeigeeinheit ausgegeben wird. Besonders vorteilhaft ist dabei, wenn die Zündaussetzer der jeweiligen Zylinder summiert werden und die Häufigkeit der Zündaussetzer angezeigt wird. Die Anzeige eines einzelnen Ereignisses eines Zündaussetzers ist für die Beurteilung des Betriebszustandes der Brennkraftmaschine in der Praxis weniger relevant. Bei bestimmten Betriebsbedingungen setzt fast jeder Zylinder hin und wieder einmal aus - wichtig ist daher auf einen Blick zu erkennen ob einige Zylinder außergewöhnlich oft aussetzen. Deshalb ist es von Vorteil, wenn die Aussetzer für jeden Zylinder gezählt werden und der Beobachter oder Nutzer nach einer bestimmten Zeitspanne die Zählwerte abliest.

Eine Vorrichtung zur Lösung der Aufgabe zur Erkennung einer ausbleibenden oder unvollkommen erfolgten Entzündung des Gemisches in mindestens einem Zylinder einer Brennkraftmaschine weist folgende Merkmale auf:
a. einen an der Abgassammelleitung angebrachten Drucksensor,
b. einen Signalgeber, zur Erzeugung eines Referenzsignals, das sich auf die Stellung eines Kolbens zu einer bestimmten Zeit T0 bezieht
c. eine Auswerteeinheit zur Auswertung des mit den Drucksensoren gemessenen Druckverlaufes in der Abgassammelleitung über der Zeit in Bezug auf die Unterschreitung eines Schwellwertes.

Eine vorteilhafte Ausbildung der Vorrichtung besteht, darin, dass eine eine Anzeigeeinheit zur Lokalisierung des oder der Zylinder mit einer ausbleibenden oder unvollkommen erfolgten Entzündung des Gemisches vorgesehen ist. Die Auswerteeinheit detektiert den unter den Schwellwert abfallenden Druck und kann mit Hilfe des Referenzsignals den oder die Zylinder mit den Zündaussetzern lokalisieren, so dass der oder die Zylinder über die Anzeigeeinheit kenntlich gemacht werden können. Die Anzeigeeinheit kann z. B. eine LED-Leiste sein mit einer der Zylinderzahl entsprechenden Anzahl von LEDs, wobei die LED leuchtet, die dem Zylinder entspricht, in dem sich der Zündaussetzer bzw. die Zündaussetzer ereignet hat. Es kann aber auch eine Textanzeige vorgesehen werden, die beispielsweise ausgibt "Zündaussetzer bei Zylinder Nummer x".

Besonders vorteilhaft ist es, wie oben bereits beschrieben, wenn die Anzeigeeinheit über einen Summenzähler zur Anzeige der Häufigkeit der Zündaussetzer verfügt.

### Kurze Beschreibung der Zeichnungen

Ein Ausführungsbeispiel der Erfindung wird anhand der Zeichnung näher beschrieben. Dabei zeigen:
Fig. 1 eine schematische Ansicht einer Brennkraftmaschine BKM mit der Vorrichtung zur Erkennung der Zündaussetzer
Fig. 2 ein Diagramm des Druckmessignales in der Abgassammeleitung AL2 über mehrere Arbeitsspiele
Fig. 3 ein Diagramm des Druckmessignales in einer Abgassammelleitung AL2 über ein Arbeitsspiel

### Bevorzugte Ausführungsform der Erfindung

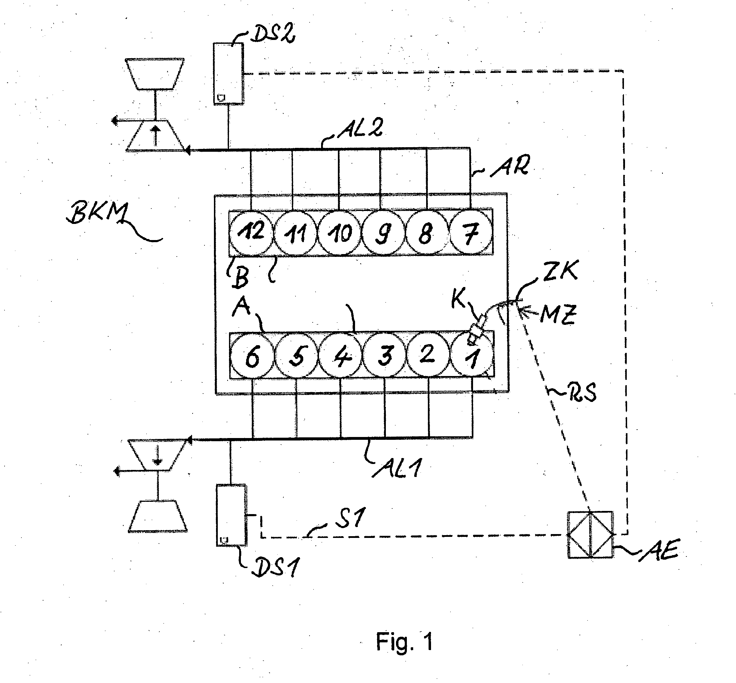

In Figur 1 ist eine eine schematische Ansicht einer Brennkraftmaschine BKM mit der erfindungsgemäßen Vorrichtung zur Erkennung von Zündaussetzern dargestellt. Diese weist zwei Zylinderbänke A und B mit jeweils sechs Zylindern 1 bis 6, bzw. 7 bis 12 auf. Solche Brennkraftmaschinen BKM sind dem Fachmann aus dem Stand der Technik hinlänglich bekannt. Für die vorliegende Erfindung ist es dabei unerheblich, mit welcher Art von Treibstoff sie betrieben werden. Im Ausführungsbeispiel wird davon ausgegangen, dass ein Treibstoffgemisch mittels Zündkerzen entzündet wird. Beispielhaft ist eine solche Zündkerze K beim Zylinder 1 schematisch dargestellt. Der Zündimpuls der Zündkerze K wird an deren Zündkabel ZK, das als Signalgeber dient, mittels einer Messzange MZ abgegriffen und als Referenzsignal RS einer Auswerteeinheit AE zugeführt.

Die Abgase der Zylinder 1 bis 12 werden über die Abgasrohre AR (der Übersichtlichkeit halber ist nur ein Abgasrohr mit dem Bezugszeichen AR versehen) in die Abgassammelleitungen AL1, AL2 geführt. An deren Ende ist jeweils ein Drucksensor DS1, DS2 angebracht, deren Drucksignale S1, S2 ebenfalls an die Auswerteeinheit AE geführt werden. Um bei Mehrzylinder - Motoren eine Zylinderzuordnung der Zündaussetzer zu ermöglichen, muss für jeden separaten Abgasstrang ein Drucksensor vorgesehen werden.

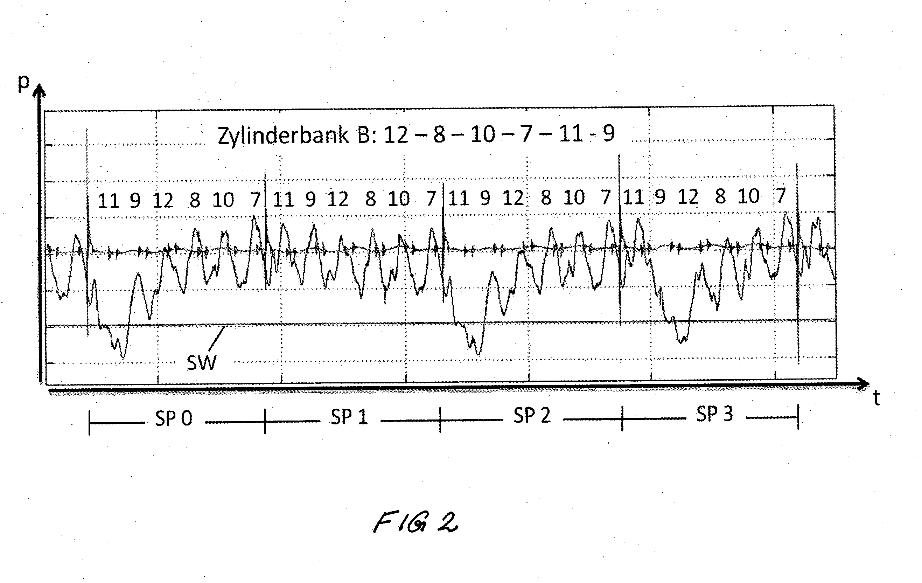

Die Funktionsweise des Verfahrens wird im Folgenden auch unter Bezugnahme auf die Figur 2 beschrieben, in der der Druckverlauf grafisch dargestellt ist. Die Zündreihenfolge der Zylinder (1 bis 12) ist 1-12-5-8-3-10-6-7-2-11-4-9. Es werden nun die Zylinder 7 bis 12 der Zylinderbank B betrachtet. Nach Öffnung des jeweiligen Auslassventils eines Zylinders erfolgt ein Druckstoß, der als Vorauslassstoß bezeichnet wird, in der Abgassammelleitung. Im eingeschwungenen Betrieb der Brennkraftmaschine BKM stellt sich damit ein typischer Abgasdruckverlauf in der Abgassammelleitung AL2 (Fig. 1) mit Maxima und Minima des Druckes ein, der mit dem Drucksensor DS2 detektiert wird. Kommt es in einem der Zylinder 7 bis 12 zu einem Zündaussetzer, so hat dies einen geringeren Druckstoß bei diesem Zylinder zur Folge. Diesen Abfall des Druckes unter den Schwellwert SW gilt es zu erkennen.

Triggert man die Druckmessung mit dem am Zündkabel ZK von Zylinder 1 mittels einer Messzange MZ abgegriffenen Referenzsignal RS (= Trigger-Signal), so kann man die Druckmaxima eindeutig den Zylindern, im Beispiel den Zylindern 7 bis 12 zuordnen.

Die Druckverläufe in der Abgassammelleitung AL2 sind in Figur 2 über die Arbeitsspiele SP0 bis SP3 dargestellt. Im Arbeitsspiel SP0 hat offensichtlich der Zylinder 11 einen Zündaussetzer gehabt. Beim Arbeitsspiel SP1 sind die Druckmaxima und -minima für jeden Zylinder (11, 9, 12, 8, 10, 7) ausgeprägt und regelmäßig vorhanden und liegen alle über dem Schwellwert SW. Das bedeutet, dass in allen Zylindern eine Verbrennung stattgefunden hat. Im Arbeitsspiel SP2 erkennt man, dass der Diagrammverlauf bei Zylinder 11 den Schwellwert SW unterschreitet, ebenso im Arbeitsspiel SP3 bei Zylinder 9. In den beiden Zylindern 11 und 9 hat es somit Zündaussetzer gegeben.

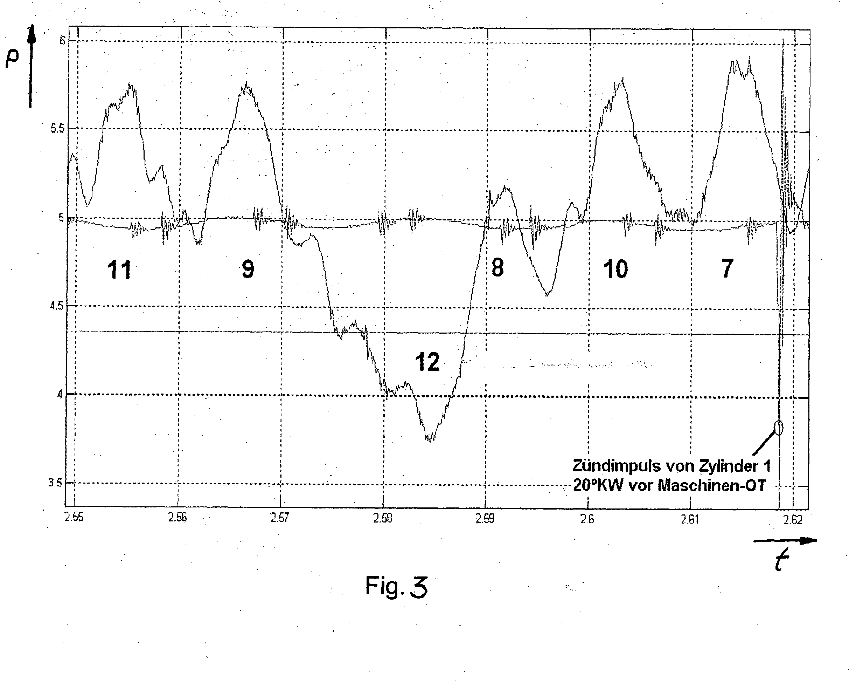

Figur 3 zeigt ein Diagramm des Druckmessignales in der Abgassammelleitung AL2 über ein Arbeitsspiel. Hier wurde bei Zylinder 12 absichtlich der Stecker der Zündkerze K gezogen. Auch hier ist deutlich zu erkennen, dass damit der Druck P über der Zeit t unter den Schwellwert SW abfällt, so dass der durch die ausbleibende Zündung verursachte Zündaussetzer erkennbar ist. An dieser Stelle sei noch angemerkt, dass durch ein einmaliges beabsichtigtes Abziehen eines Zündkerzensteckers eine Zuordnung der Zylinder zu den Druckmaxima- und Minima erfolgen kann. Die Zuordnung der Zylinder zu den Druckverläufen kann aber auch theoretisch ermittelt werden.

Der Schwellwert kann durch Erprobung auf einen vorgegeben Prozentanteil des mittleren Abgasdruckes, z. B. bei 85% des mittleren Abgasdruckes, eingestellt werden. Wie bereits oben beschrieben, kann der Schwellwert SW auch aus einem vom Betriebspunkt abhängigen Kennfeld abgefragt werden, das einmal generiert wird, wenn alle Zylinder ordnungsgemäß arbeiten. Das Kennfeld kann aus einer Sammlung von Messungen in Abhängigkeit von Last und Drehzahl gebildet werden. Im vorliegenden Fall ist die Drehzahl fest, womit eine einzelne Kennlinie ausreicht. Wenn man künstliche Zündaussetzer provoziert (z. B. durch Abmagern) kann man jeweils den Schwellwert SW, bei dem die Erkennung der Zündaussetzer optimal funktioniert, durch Probieren finden. Die Erstellung eines solchen Kennfeldes ist nur einmal nötig.

Jede Zylinderbank A, B hat einen eigenen Drucksensor DS1, DS2 und damit auch einen eigenen Druckverlauf, der ausgewertet werden muss. Das Referenzsignal gilt jedoch für den gesamten Motor und wird im Beispiel durch den Zündimpuls von Zylinder 1 bei 20 Grad Kurbelwelle vor dem oberen Maschinen-Totpunkt (Maschinen-OT), generiert. Als "Maschinen-OT" ist der obere Totpunkt des ersten Zylinders definiert. Bezogen auf diesen OT sind alle Ventilsteuerzeiten definiert. Es ist somit bekannt, um wie viele Grad-Kurbelwinkel nach dem Maschinen-OT die Auslassventile der jeweiligen Zylinder öffnen, also wann dort der Druckstoß in die Sammelleitung erfolgt. Die Auswerteeinheit AE kennt diese Winkellagen aller Zylinder und kann bei gegebener Drehzahl den Zeitpunkt zuordnen, zu dem der jeweilige Druckverlauf ausgelesen wird.

Auswerteeinheit und Anzeigeeinheit können eine bauliche Einheit bilden, die einen Mikrocontroller und die LED- oder Klartextanzeige oder ähnliches umfasst. Der Maschinenverantwortliche oder die Leitstelle kann dann über die LED Anzeige oder über die Klartextanzeige erkennen, welcher Zylinder durch - insbesondere häufige - Zündaussetzer Probleme bereitet.

Das Verfahren ist einfach und kostengünstig zu realisieren. Es ist lediglich für jede Zylinderbank ein Drucksensor erforderlich und nur eine Anzeige-/ Auswerteeinheit um den Maschinisten einen verlässlichen Hinweis auf die Zylinder mit Zündaussetzern zu geben.

## Patentansprüche

1. Verfahren zur zylinderselektiven Erkennung einer ausbleibenden oder unvollkommen erfolgten Entzündung des Gemisches in mindestens einem Zylinder (1 bis 12) einer Brennkraftmaschine (BKM) mit mindestens einem Zylinder (1 bis 12), wobei die Abgase aus den Zylindern (1 bis 12) über eine Abgassammelleitung (AL1, AL2) geführt werden, **gekennzeichnet durch** folgende Schritte:
a. Bildung eines Referenzssignals (RS), das sich auf die Stellung eines Zylinderkolbens zu einer bestimmten Zeit T0 bezieht, wobei als Referenzssignal (RS) der Impuls der Zündspannung eines bestimmten Zylinders (1 bis 12) als Trigger-Signal verwendet wird,
b. Messung des Druckes in der Abgassammelleitung (AL1, AL2),
c. Auswertung des Drucksignals in der Abgassammelleitung (AL1, AL2) über der Zeit (t) in Abhängigkeit vom Referenzsignal (RS) in Bezug auf die Unterschreitung eines Schwellwertes (SW).

2. Verfahren nach Anspruch 1, **dadurch gekennzeichnet, dass** das Referenzsignal (RS) von der Nockenwelle abgegriffen wird.

3. Verfahren nach einem der vorstehenden Ansprüche, **dadurch gekennzeichnet, dass** der Schwellwert (SW) aus dem Mittelwert des Drucksignals erzeugt wird.

4. Verfahren nach einem der Ansprüche 1 oder 2, **dadurch gekennzeichnet, dass** als Schwellwert (SW) ein vorgegebenes Kennfeld verwendet wird.

5. Verfahren nach einem der vorstehenden Ansprüche, **dadurch gekennzeichnet, dass** ein aussetzender oder unvollkommen zündender Zylinder (1 - 12) über eine Anzeigeeinheit ausgegeben wird.

6. Verfahren nach Anspruch 5, **dadurch gekennzeichnet, dass** die Zündaussetzer der jeweiligen Zylinder (1 - 12) summiert werden und die Häufigkeit der Zündaussetzer angezeigt wird.

7. Vorrichtung zur Durchführung des Verfahrens nach einem der vorstehenden Ansprüche mit
a. einem an jeder Abgassammelleitung (AL1, AL2) angebrachten Drucksensor (DS1, DS2),
b. einem Signalgeber (ZK), zur Erzeugung eines Referenzsignales (RS), das sich auf die Stellung eines Zylinderkolbens zu einer bestimmten Zeit T0 bezieht,
c. einer Auswerteeinheit (AE) zur Auswertung des mit den Drucksensoren (DS1, DS2) gemessenen Druckverlaufes in einer Abgassammelleitung (AL1, AL2) über der Zeit (t) in Bezug auf die Unterschreitung eines Schwellwertes (SW).

8. Vorrichtung nach Anspruch 7, **dadurch gekennzeichnet, dass** eine Anzeigeeinheit zur Lokalisierung des oder der Zylinder (1 bis 12) mit einer ausbleibenden oder unvollkommen erfolgten Entzündung des Gemisches vorgesehen ist.

9. Vorrichtung nach Anspruch 8, **dadurch gekennzeichnet, dass** die Anzeigeeinheit über einen Summenzähler zur Anzeige der Häufigkeit der Zündaussetzer verfügt.

## Claims

1. A method for cylinder-selective detection of a failed or imperfectly performed ignition of the mixture in at least one cylinder (1 to 12) of an internal combustion engine (BKM) with least one cylinder (1 to 12), wherein the exhaust gases from the cylinders (1 to 12) are led through an exhaust gas collecting line (AL1, AL2), **characterized by** the following steps:
a. Forming of a reference signal (RS), which refers to the position of the cylinder piston at a given time T0, wherein as a reference signal the pulse of the ignition voltage of a certain cylinder (1 to 12) is used as a trigger signal,
b. Measuring the pressure in the exhaust gas collecting line (AL1, AL2),
c. Analysis of the pressure signal in the exhaust gas collecting line (AL1, AL2) over time (t) in dependence on the reference signal (RS) with respect to the undershooting of a threshold value (SW).

2. A method according to claim 1, **characterized in that** the reference signal (RS) is tapped by the camshaft.

3. A method according to one of the preceding claims, **characterized in that** the threshold value (SW) is generated from the average of the pressure signal.

4. A method according to one of claims 1 or 2, **characterized in that** a predetermined map is used as the threshold value (SW).

5. A method according to one of the preceding claims, **characterized in that** a discontinuously or imperfectly igniting cylinder (1- 12) is outputted by a display unit.

6. A method according to claim 5, **characterized in that** the misfires of the respective cylinders (1-12) are summed and the frequency of the misfires is displayed.

7. A device for implementing the method according to one of the preceding claims with
a. a pressure sensor (DS1, DS2) mounted on each exhaust gas collecting line (AL1, AL2),
b. a signal generator (ZK), for generating a reference signal (RS), which refers to the position of the cylinder piston at a given time T0
c. an evaluation unit (AE) for the evaluation of the pressure profile measured in an exhaust gas collecting line (AL1, AL2) with the pressure sensors (DS1, DS2) over time (t) in reference to the undershooting of a threshold value (SW).

8. A device according to claim 7, **characterized in that** a display unit is provided for locating the cylinder(s) (1 to 12) with a failed or imperfectly performed ignition of the mixture.

9. A device according to claim 8, **characterized in that** the display unit has a total counter for indicating the frequency of the misfires.

## Revendications

1. Procédé de reconnaissance sélective par cylindre d'un allumage raté ou incomplet du mélange dans au moins un cylindre (1 à 12) d'un moteur à combustion interne (BKM) avec au moins un cylindre (1 à 12), dans lequel on conduit les gaz d'échappement hors des cylindres (1 à 12) via une conduite de collecte de gaz d'échappement (AL1, AL2), **caractérisé par** les étapes suivantes:
a. formation d'un signal de référence (RS), qui se rapporte à la position d'un piston de cylindre à un instant déterminé T0, dans lequel on utilise comme signal de référence (RS) l'impulsion de la tension d'allumage d'un cylindre déterminé (1 à 12) comme signal de déclenchement,
b. mesure de la pression dans la conduite de collecte de gaz d'échappement (AL1, AL2),
c. exploitation du signal de pression dans la conduite de collecte de gaz d'échappement (AL1, AL2) au cours du temps (t) en fonction du signal de référence (RS) par rapport au franchissement vers le bas d'une valeur de seuil (SW).

2. Procédé selon la revendication 1, **caractérisé en ce que** l'on prélève le signal de référence (RS) à l'arbre à cames.

3. Procédé selon l'une quelconque des revendications précédentes, **caractérisé en ce que** l'on produit la valeur de seuil (SW) à partir de la valeur moyenne du signal de pression.

4. Procédé selon l'une des revendications 1 ou 2, **caractérisé en ce que** l'on utilise comme valeur de seuil (SW) un diagramme caractéristique prédéterminé.

5. Procédé selon l'une quelconque des revendications précédentes, **caractérisé en ce que** l'on indique un cylindre (1 - 12) présentant un allumage raté ou incomplet au moyen d'une unité d'affichage.

6. Procédé selon la revendication 5, **caractérisé en ce que** l'on totalise les ratés d'allumage des cylindres respectifs (1 - 12) et on affiche la fréquence des ratés d'allumage.

7. Dispositif pour la mise en oeuvre du procédé selon l'une quelconque des revendications précédentes, comportant
a. un capteur de pression (DS1, DS2) installé sur chaque conduite de collecte de gaz d'échappement (AL1, AL2),
b. un émetteur de signal (ZK), pour la production d'un signal de référence (RS), qui se rapporte à la position d'un piston de cylindre à un instant déterminé T0,
c. une unité d'exploitation (AE) pour l'exploitation de la courbe de pression mesurée avec les capteurs de pression (DS1, DS2) dans une conduite de collecte de gaz d'échappement (AL1, AL2) au cours du temps (t) par rapport au franchissement vers le bas d'une valeur de seuil (SW).

8. Dispositif selon la revendication 7, **caractérisé en ce qu'**il est prévu une unité d'affichage pour la localisation du ou des cylindre(s) (1 à 12) présentant un allumage raté ou incomplet du mélange.

9. Dispositif selon la revendication 8, **caractérisé en ce que** l'unité d'affichage dispose d'un compteur totalisateur pour l'affichage de la fréquence des ratés d'allumage.
